# EUROPEAN PATENT APPLICATION

(11) **EP 4 583 269 A1**
(43) Date of publication of application: **09.07.2025**
(21) Application number: 23858913.9
(22) Date of filing: 30.06.2023
(51) Int. Cl.: H01M 50/204, H01M 50/244, A62C 3/16, B60L 53/80

(54) **BATTERY COMPARTMENT OF BATTERY CHARGING AND SWAPPING STATION, AND BATTERY CHARGING AND SWAPPING STATION**

(30) Priority: 29.08.2022 CN 202211048675
(71) Applicant: Nio Technology (Anhui) Co., Ltd, Hefei City, Anhui 230601 (CN)
(72) Inventor: ZHOU, Xiaohong, Shanghai 201804 (CN); ZHU, Yue, Shanghai 201804 (CN); GU, Hao, Shanghai 201804 (CN); ZOU, Jiyong, Shanghai 201804 (CN)
(74) Representative: Vossius & Partner Patentanwälte Rechtsanwälte mbB
(86) International application number: PCT/CN2023/104961
(87) International publication number: WO 2024/045875

(57) **Abstract**

The invention relates to the technical field of battery swapping, and particularly provides a battery compartment of a battery charging and swapping station, and a battery charging and swapping station, aiming to solve the problem of delayed cooling of abnormal batteries in existing battery compartments. For this purpose, the battery compartment of the invention includes a battery rack, a cooling member, and a supporting part, wherein the cooling member is provided with a cooling cavity capable of accommodating batteries, the cooling cavity has an opening at a top through which a battery can pass; and the supporting part is located above the cooling cavity and configured to both bear and release the battery, allowing the battery to quickly fall into the cooling cavity. By means of such an arrangement, when a risky battery is detected on the battery rack, the risky battery can be first conveyed to the supporting part and then monitored continuously. After an anomaly occurs in the risky battery, the supporting part releases the risky battery, so that the battery can quickly fall into the cooling cavity below. Thus, the abnormal battery can be treated promptly, thereby reducing safety risks.

## Description

The present application claims the priority to Chinese Patent Application No. CN202211048675.4, filed on August 29, 2022, and entitled "BATTERY COMPARTMENT OF BATTERY CHARGING AND SWAPPING STATION, AND BATTERY CHARGING AND SWAPPING STATION", which is incorporated herein by reference in its entirety.

### Technical Field

The invention relates to the technical field of battery swapping, and in particular to a battery compartment of a battery charging and swapping station and a battery charging and swapping station.

### Technical Background

Battery swapping is a rapid energy replenishment method for electric vehicles, and specifically, refers to an energy replenishment method in which a traction battery of an electric vehicle is removed and immediately replaced with another traction battery by using a battery swapping device. A battery charging and swapping station is a place for implementing battery swapping for traction batteries of electric vehicles.

The battery charging and swapping station mainly includes a battery compartment and a battery swapping device. The battery compartment is mainly used for storing batteries, and the battery swapping device is mainly used for removing a depleted battery from an electric vehicle and installing a fully charged battery on the electric vehicle.

At present, most of the traction batteries used in electric vehicles are lithium-ion batteries. In cases of overcharging, over-discharging, or battery material problems, excessive internal heating of the lithium-ion battery can lead to thermal runaway, even potentially causing fires or explosions. When a plurality of batteries are stored in a battery compartment of a battery charging and swapping station, if the thermal runaway of a single battery is not properly controlled and managed for fire control, which may even cause a chain reaction, resulting in the thermal runaway of the other batteries in the station and resulting in severe fires and explosions.

A fire protection system is generally provided in a battery compartment of an existing battery charging and swapping station. The fire protection system mainly includes a monitoring device and a cooling device. The monitoring device is used for monitoring batteries. When an abnormality occurs in a battery, the abnormal battery is transported into the cooling device by a stacker installed in the battery compartment and cooled by means of a cooling medium in the cooling device. However, the existing battery compartment has a problem of delayed cooling of an abnormal battery, thus causing a safety risk.

Therefore, there is a need for a novel technical solution in the art to solve the problems described above.

### Summary

The invention aims to solve the above-mentioned technical problems, i.e., to solve the problem of delayed cooling of an abnormal battery in an existing battery compartment.

In a first aspect, the invention provides a battery compartment of a battery charging and swapping station, the battery compartment including: a battery rack configured to store batteries; a cooling member located at a bottom of the battery rack, the cooling member having a cooling cavity capable of accommodating a battery, wherein the cooling cavity has an opening at a top through which allows a battery to pass; and a supporting part located above the cooling cavity, wherein the supporting part is configured to both bear and release the battery, allowing the battery to fall quickly into the cooling cavity.

In a preferred technical solution of the battery compartment of the battery charging and swapping station, the supporting part comprises two rotational support devices oppositely arranged in a horizontal direction, the rotational support devices being configured to be unable to rotate in a locked state so as to bear the battery, and to be allowed to rotate in an unlocked state so as to release the battery.

In a preferred technical solution of the battery compartment of the battery charging and swapping station, each of the rotational support devices includes a fixed member, and a locking mechanism and a rotational support mechanism that are mounted on the fixed member, where the rotational support mechanism is pivotally connected to the fixed member, the locking mechanism is configured to maintain the rotational support mechanism in a horizontal state to bear the battery in a locked state, and the locking mechanism is further configured to allow the rotational support mechanism to rotate to release the battery in an unlocked state.

In a preferred technical solution of the battery compartment of the battery charging and swapping station, the rotational support mechanism includes a horizontal support member and a rotating member mounted on the horizontal support member, where the rotating member is located between a first end and a second end of the horizontal support member and is pivotally connected to the fixed member, the locking mechanism, in the locked state, presses against the first end of the horizontal support member or a position close to the first end of the horizontal support member to maintain the horizontal support member in a horizontal state and thus allow the second end of the horizontal support member to be able to support the battery from below, the locking mechanism, in the unlocked state, can move to a position away from the first end of the horizontal support member to allow the horizontal support member to rotate about the rotating member as a rotation axis to release the battery.

In a preferred technical solution of the battery compartment of the battery charging and swapping station, the locking mechanism, in the unlocked state, can move horizontally to a position away from the first end of the horizontal support member in a direction from the second end of the horizontal support member to the first end of the horizontal support member.

In a preferred technical solution of the battery compartment of the battery charging and swapping station, the rotational support mechanism further includes an elastic return member mounted between the fixed member and the rotating member, so as to enable the horizontal support member to rotate and return to the horizontal state after the battery is released.

In a preferred technical solution of the battery compartment of the battery charging and swapping station, the locking mechanism includes a driving member mounted on the fixed member and a locking member in driving connection with the driving member, wherein the locking member presses against the first end of the horizontal support member to maintain the horizontal support member in the horizontal state, and the driving member is able to drive the locking member to move horizontally in the direction from the second end of the horizontal support member to the first end of the horizontal support member to release the locking of the horizontal support member.

In a preferred technical solution of the battery compartment of the battery charging and swapping station, a rotary member is provided at the first end of the horizontal support member and can rotate relative to the horizontal support member, and the locking member presses against the rotary member.

In a preferred technical solution of the battery compartment of the battery charging and swapping station, the locking mechanism further includes a position detection member mounted on the fixed member, the position detection member being configured for detecting a movement position of the locking member.

In a preferred technical solution of the battery compartment of the battery charging and swapping station, the locking mechanism further includes a first guide member and a second guide member, the first guide member being fixedly connected to the fixed member, the second guide member being fixedly connected to the locking member, and the first guide member fitting with the second guide member to guide the locking member during the movement thereof relative to the fixed member.

In a preferred technical solution of the battery compartment of the battery charging and swapping station, the battery compartment further includes a first horizontal positioning member and a second horizontal positioning member that are positioned above the horizontal support member, where the first horizontal positioning member and the second horizontal positioning member are respectively used to position the battery in an X-direction and a Y-direction so that the battery accurately falls onto the horizontal support member and thus accurately falls into the cooling cavity when released.

In a preferred technical solution of the battery compartment of the battery charging and swapping station, the rotating member is arranged on a top surface of the horizontal support member to form the first horizontal positioning member.

In a preferred technical solution of the battery compartment of the battery charging and swapping station, the battery compartment further includes a third horizontal positioning member and a fourth horizontal positioning member that are arranged below the supporting part, where the third horizontal positioning member and the fourth horizontal positioning member are respectively used to position the cooling member in an X-direction and a Y-direction to align the opening with the supporting part, such that the battery on the supporting part can accurately pass through the opening and fall into the cooling cavity when released.

In a preferred technical solution of the battery compartment of the battery charging and swapping station, the third horizontal positioning member includes two sets of positioning rollers arranged oppositely in the X-direction, the positioning rollers being horizontally mounted on the battery rack and being rotatable about vertical axes relative to the battery rack; and/or the fourth horizontal positioning member includes two strip-shaped positioning blocks extending in the X-direction and arranged oppositely, the strip-shaped positioning blocks being horizontally mounted on the battery rack.

In a preferred technical solution of the battery compartment of the battery charging and swapping station, wheels are provided at a bottom of the cooling member, and/or pull handles are provided on a side portion of the cooling member.

In a preferred technical solution of the battery compartment of the battery charging and swapping station, the cooling member is provided with a film covering the opening.

In a preferred technical solution of the battery compartment of the battery charging and swapping station, the battery compartment further includes a heating member provided in the cooling cavity, where the heating member can heat the water in the cooling cavity to prevent freezing.

In a second aspect, the invention further provides a battery charging and swapping station, including a battery compartment as described above.

In a preferred technical solution of the battery charging and swapping station, an access port is formed in a housing of the battery compartment at a position corresponding to the cooling member.

In a preferred technical solution of the battery charging and swapping station, a fire door is provided at the access port, the fire door enables the access port to be opened and closed, and the bottom of the fire door is hinged to the housing, such that the fire door forms a ramp when opened.

With the above technical solutions, in the invention, the supporting part is arranged above the cooling member, when a risky battery is detected on the battery rack, the risky battery can be first conveyed to the supporting part and then monitored continuously, and after an anomaly occurs in the risky battery, the supporting part releases the risky battery, such that the battery can quickly fall into the cooling cavity below. The battery is cooled by a cooling medium in the cooling cavity, such that the abnormal battery can be promptly treated, thereby reducing safety risks.

Further, in the invention, the supporting part is configured as the rotational support devices, which can quickly release the battery as desired, allowing the battery to quickly fall into the cooling cavity of the cooling member for more timely treatment.

Still further, in the invention, the locking mechanism is configured to be able to move horizontally to a position away from the first end of the horizontal support member in a direction from the second end of the horizontal support member to the first end of the horizontal support member, when the battery needs to be released, the locking mechanism can be quickly disengaged from the horizontal support member, allowing the horizontal support member to rotate rapidly, and further increasing the release speed of the battery.

Yet still further, in the invention, the rotary member is arranged at the first end of the horizontal support member to facilitate the movement of the locking member relative to the horizontal support member, enabling the locking member to be smoothly disengaged from and then smoothly press against the horizontal support member again.

Yet still further, in the invention, the first horizontal positioning member and the second horizontal positioning member are arranged above the horizontal support member to horizontally position the battery, such that the battery accurately falls into the cooling cavity of the cooling member below when released from the horizontal support member.

Yet still further, in the invention, the third horizontal positioning member and the fourth horizontal positioning member are arranged below the supporting part to horizontally position the cooling member to align the opening of the cooling cavity with the supporting part above, so that the battery on the supporting part can accurately pass through the opening and enter the cooling cavity when released.

### Brief Description of the Drawings

Preferred implementations of the invention are described below with reference to the accompanying drawings, in which:
FIG. 1 is a structural schematic diagram of a battery compartment according to the invention;
FIG. 2 is a partial structural schematic diagram of a battery compartment according to the invention;
FIG. 3 is a first structural schematic diagram of a rotational support device of a battery compartment according to the invention; and
FIG. 4 is a second structural schematic diagram of a rotational support device of a battery compartment according to the invention.

List of reference signs:
1. Battery rack; 2. Cooling member; 21. Wheel; 22. Pull handle; 3. Rotational support device; 31. Fixed member; 32. Locking mechanism; 33. Rotational support mechanism; 321. Driving member; 322. Locking member; 323. First proximity switch; 324. Second proximity switch; 325. First guide member; 326. Second guide member; 331. Horizontal support member; 332. Rotating member; 333. Horizontal fixed shaft; 334. Roller; 3311. First support plate; 3312. Second support plate; 4. Third proximity switch; 5. Positioning roller; 6. Strip-shaped positioning block; 7. Risky battery.

### Detailed Description of Embodiments

Preferred implementations of the invention will be described below with reference to the accompanying drawings. Those skilled in the art should understand that these implementations are merely used to explain the technical principles of the invention, and are not intended to limit the scope of protection of the invention.

It should be noted that, in the description of the invention, the terms that indicate the direction or positional relationship, such as "left", "right", "upper", "lower", "top", and "bottom", are based on the direction or positional relationship shown in the figures, which is merely for ease of description instead of indicating or implying that the device or element must have a particular orientation and be constructed and operated in a particular orientation, and therefore, should not be construed as limiting the invention.

In addition, it should also be noted that, in the description of the invention, the terms "dispose", "connect" and "mount" should be interpreted in a broad sense unless explicitly defined and limited otherwise. For example, a connection may be a fixed connection, a detachable connection, or an integral connection. For those skilled in the art, the specific meanings of the foregoing terms in the invention can be interpreted according to a specific situation.

Specifically, the invention provides a battery charging and swapping station for replacing traction batteries for vehicles. The battery charging and swapping station of the invention mainly includes a battery swapping platform, a battery compartment and a battery swapping device.

The battery swapping platform can bear a vehicle that requires battery swapping. The battery compartment can store batteries. The battery swapping device is mainly used for removing a depleted battery from the vehicle and installing a fully charged battery on the vehicle.

After the vehicle that requires battery swapping enters the battery charging and swapping station, the vehicle can be guided by staff to park at a designated position on the battery swapping platform, the battery swapping device will remove the depleted battery from the vehicle, transport it into the battery compartment, then bring back a fully charged battery from the battery compartment and install it on the vehicle.

It should be noted that, in practical applications, those skilled in the art can configure the battery swapping device as a rail guided vehicle (RGV), or as an automated guided vehicle (AGV), etc. Such adjustments and modifications to the specific type of the battery swapping device do not depart from the principles and scope of the invention and should all fall within the scope of protection of the invention.

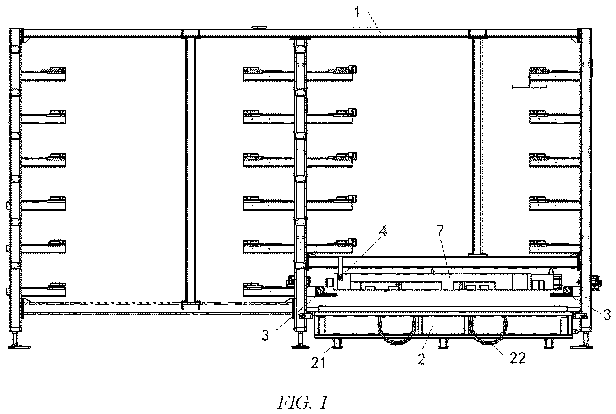

As shown in FIG. 1, the battery compartment of the invention includes a battery rack 1, a cooling member 2, and a supporting part, where he battery rack 1 is configured to store batteries; the cooling member 2 is located at the bottom of the battery rack 1, the cooling member 2 has a cooling cavity that can accommodate a battery, and the cooling cavity has an opening at a top through which a battery can pass; and the supporting part is located above the cooling cavity and configured to both bear and release the battery, allowing the battery to quickly fall into the cooling cavity.

A risk monitoring area is formed by arranging the supporting part above the cooling cavity. When a risky battery is detected on the battery rack 1, the risky battery 7 can be first conveyed to the supporting part and then monitored continuously. After an anomaly occurs in the risky battery 7, the supporting part releases the risky battery 7, so that the risky battery 7 can quickly fall into the cooling cavity below. The risky battery 7 is cooled by a cooling medium (such as cooling water) in the cooling cavity, so that the abnormal battery can be promptly processed, thereby reducing safety risks.

As an example, a temperature sensor is arranged in the battery compartment to monitor the temperature of each battery. When the temperature of the battery reaches a first set temperature, the battery is identified as a risky battery. The risky battery 7 is transferred to the supporting part by a stacker provided in the battery compartment. The temperature of the risky battery 7 on the supporting part continues to be monitored. When the temperature of the risky battery 7 reaches a second set temperature, the risky battery 7 is determined to be abnormal and the risky battery 7 is then released to fall into the cooling cavity below for cooling. The first set temperature is lower than the second set temperature. In practical applications, those skilled in the art can flexibly set specific values of the first and second set temperatures experimentally.

It should be noted that, in practical applications, those skilled in the art can configure the cooling member 2 as a cooling tank, a cooling barrel, and so on. Such adjustments and modifications to the specific structural form of the cooling member 2 do not depart from the principles and scope of the invention and should all fall within the scope of protection of the invention.

It should also be noted that, in practical applications, those skilled in the art may configure the supporting part as a rotational support device, or the supporting part can be configured as a horizontally extendable support device, etc., as long as the supporting part can both bear and release the battery.

Preferably, as shown in FIG. 1, the supporting part of the invention includes two rotational support devices 3 oppositely arranged in a horizontal direction, and the rotational support devices 3 may not rotate in a locked state so as to bear the battery, and the rotational support devices 3 are allowed to rotate when in an unlocked state so as to release the battery.

As an example, the two rotational support devices 3 are both mounted on the battery rack 1. The rotational support devices 3 may not rotate when the rotational support devices 3 are in a locked state normally. After a battery on the battery rack 1 is identified as a risky battery, the stacker moves the risky battery 7 onto the rotational support devices 3. The rotational support devices 3 support the risky battery 7 from below. When an anomaly occurs in the risky battery 7, the rotational support devices 3 switch from the locked state to the unlocked state. The rotational support devices 3 can then rotate to release the risky battery 7, allowing the risky battery 7 to quickly fall into the cooling cavity below for cooling.

It should be noted that, in practical applications, those skilled in the art may not mount the rotational support devices 3 on the battery rack 1. For example, an independent support frame can be provided for the rotational support devices 3, as long as the rotational support devices 3 are positioned above the cooling cavity of the cooling member 2. Of course, it is preferred to mount the rotational support devices 3 on the battery rack 1, facilitating arrangement and reducing costs.

Preferably, as shown in FIGs. 1, 3 and 4, each rotational support device 3 of the invention includes a fixed member 31, and a locking mechanism 32 and a rotational support mechanism 33 that are mounted on the fixed member 31, where the rotational support mechanism 33 is pivotally connected to the fixed member 31.

The locking mechanism 32 is configured to maintain the rotational support mechanism 33 in a horizontal state to bear the battery when in a locked state. The locking mechanism 32 is also configured to allow the rotational support mechanism 33 to rotate to release the battery when in an unlocked state.

As an example, as shown in FIG. 1, the two rotational support devices 3 are oppositely arranged on left and right sides in a horizontal direction. The fixed members 31 of the two rotational support devices 3 are both fixedly mounted to the battery rack 1. The rotational support device 3 on the left side supports a left side of the risky battery 7, and the rotational support device 3 on the right side supports a right side of the risky battery 7. When the risky battery 7 needs to be released, the rotational support device 3 on the left side rotates clockwise, and the rotational support device 3 on the right side rotates counterclockwise, so as to release the risky battery 7.

It should be noted that, in practical applications, those skilled in the art may configure the rotational support devices 3 to release the battery when rotating by 30°, or alternatively, may configure the rotational support devices 3 to release the battery when rotating by 45°, or may even configure the rotational support devices 3 to release the battery when rotating by 90°, etc. Such flexible adjustments and modifications do not depart from the principles and scope of the invention, and should all fall within the scope of protection of the invention.

It should be noted that, in practical applications, those skilled in the art can configure the fixed member 31 as a fixed plate, a fixed block, a fixed mount, and so on. Such adjustments and modifications to the specific structural form of the fixed member 31 do not depart from the principles and scope of the invention and should all fall within the scope of protection of the invention.

In addition, it should be noted that, in practical applications, those skilled in the art can configure the locking mechanism 32 as an electric locking mechanism, a hydraulic locking mechanism, or a pneumatic locking mechanism, and so on. Such adjustments and modifications to the specific type of the locking mechanism 32 do not depart from the principles and scope of the invention and should all fall within the scope of protection of the invention.

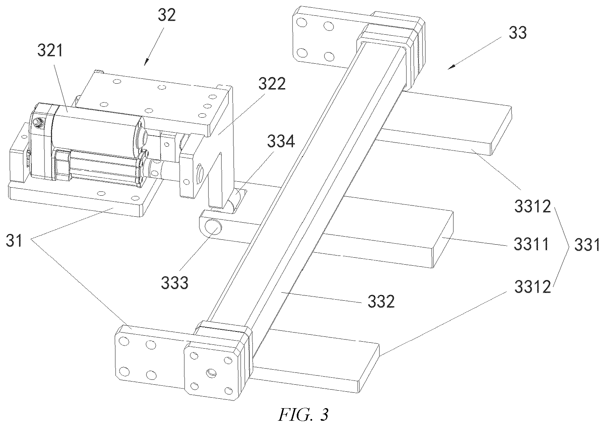

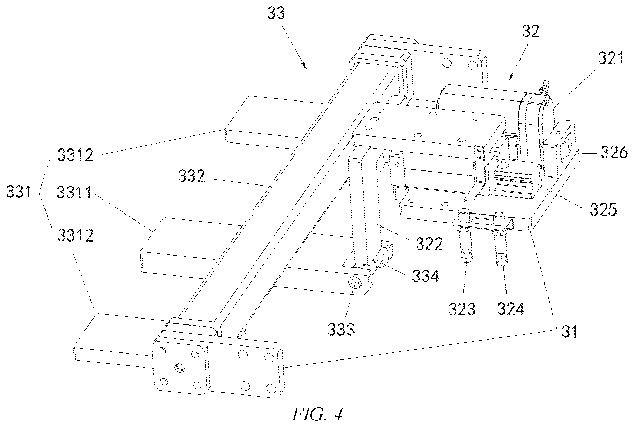

Preferably, as shown in FIGs. 3 and 4, the rotational support mechanism 33 of the invention includes a horizontal support member 331 and a rotating member 332 mounted on the horizontal support member 331, where the rotating member 332 is located between a first end and a second end of the horizontal support member 331 and is pivotally connected to the fixed member 31.

The locking mechanism 32, in a locked state, presses against the first end (i.e., the left end in FIG. 3) of the horizontal support member 331 to maintain the horizontal support member 331 in a horizontal state, thereby allowing the second end (i.e., the right end in FIG. 3) of the horizontal support member 331 to be able to support the battery from below; and the locking mechanism 32, in an unlocked state, can move to a position away from the first end of the horizontal support member 331, allowing the horizontal support member 331 to rotate about the rotating member 332 as the rotation axis to release the battery.

As an example, as shown in FIG. 3, the horizontal support member 331 includes a first support plate 3311 and second support plates 3312. The rotating member 332 is a square tube located between a first end and a second end of the first support plate 3311. Both ends of the square tube are both pivotally connected to the fixed member 31. The first support plate 3311 has a length greater than the second support plates 3312. The first support plate 3311 is located in the middle of the square tube. Two second support plates 3312 are provided and are located on two sides of the first support plate 3311.

When the locking mechanism 32 is in the locked state, the locking mechanism 32 presses against the first end of the first support plate 3311, maintaining both the first support plate 3311 and the second support plates 3312 in the horizontal state. The second end of the first support plate 3311 and second ends of the second support plates 3312 both support the battery from below.

When the battery needs to be released, the locking mechanism 32 switches from the locked state to the unlocked state and moves to a position away from the first end of the first support plate 3311. Under the action of gravity of the battery and the action of gravity of the first support plate 3311 and the second support plates 3312, the first support plate 3311 and the second support plates 3312 rotate about the square tube as the rotation axis, so as to releasing the battery.

It should be noted that the horizontal support member 331 is not limited to the first support plate 3311 and the second support plates 3312 described above, and the rotating member 332 is also not limited to the square tube described above. For example, the horizontal support member 331 may be configured as an integrated support plate, or may be configured as a support frame, etc. Additionally, the rotating member 332 may be configured as a round tube, a rotating shaft, etc. Such adjustments and modifications to the specific structural forms of the horizontal support member 331 and the rotating member 332 do not depart from the principles and scope of the invention, and should all fall within the scope of protection of the invention.

Furthermore, it should be noted that, when the locking mechanism 32 is in the locked state, the locking mechanism 32 can also press against the horizontal support member 331 at a position near the first end of the horizontal support member 331, thereby maintaining the horizontal support member 331 in the horizontal state. Such flexible adjustments and modifications do not depart from the principles and scope of the invention, and should all fall within the scope of protection of the invention.

Furthermore, it should be noted that when it is necessary for the locking mechanism 32 to switch to the unlocked state, the locking mechanism 32 can move vertically upward to a position away from the first end of the horizontal support member 331, or the locking mechanism 32 can move horizontally to a position away from the first end of the horizontal support member 331 in a direction from the first end to the second end of the horizontal support member 331, or alternatively, the locking mechanism 32 can move horizontally to a position away from the first end of the horizontal support member 331 in a direction from the second end to the first end of the horizontal support member 331, and so on. Such flexible adjustments and modifications do not depart from the principles and scope of the invention, and should all fall within the scope of protection of the invention.

Preferably, as shown in FIGs. 3 and 4, in the unlocked state, the locking mechanism 32 can be moved horizontally to a position away from the first end of the horizontal support member 331 in the direction from the second end of the horizontal support member 331 to the first end of the horizontal support member 331.

When it is necessary to release the battery, the locking mechanism 32 is moved horizontally in the direction from the second end to the first end of the horizontal support member 331, so that the locking mechanism 32 can quickly disengage from the horizontal support member 331, thereby enabling the battery to be released rapidly.

Preferably, the rotational support mechanism 33 of the invention further includes an elastic return member (not shown) is mounted between the fixed member 31 and the rotating member 332, so as to enable the horizontal support member 331 to rotate and return to the horizontal state after the battery is released.

As an example, the elastic return member is a torsion spring. A fixed end of the torsion spring is fixedly connected to the fixed member 31, and a free end of the torsion spring is fixedly connected to the rotating member 332. During releasing the battery, the horizontal support member 331 together with the rotating member 332 to rotate relative to the fixed member 31, causing the torsion spring to be compressed. After the battery is fully released, under an elastic effect of the torsion spring, the rotating member 332 and the horizontal support member 331 are caused to rotate in opposite directions, so that the horizontal support member 331 rotate back to the horizontal state. The locking mechanism 32 is then moved back to a locked position and presses against the horizontal support member 331 again.

Preferably, as shown in FIGs. 3 and 4, the locking mechanism 32 of the invention includes a driving member 321 mounted on the fixed member 31 and a locking member 322 in driving connection with the driving member 321. The locking member 322 presses against the first end of the horizontal support member 331 to maintain the horizontal support member 331 in the horizontal state; and the driving member 321 can drive the locking member 322 to move horizontally in the direction from the second end of the horizontal support member 331 to the first end of the horizontal support member 331 to release the locking of the horizontal support member 331.

In other words, when the locking mechanism 32 is in the locked state, the locking member 322 presses against the first end of the horizontal support member 331 to lock the horizontal support member 331 and prevent the horizontal support member 331 from rotating, thereby enabling the horizontal support member 331 to bear the battery. When it is necessary to release the battery, the driving member 321 drives the locking member 322 to move horizontally to disengage the locking member 322 from the horizontal support member 331 and thus release the locking of the horizontal support member 331. Under the action of gravity of the battery, the horizontal support member 331 rotates downward to release the battery.

As an example, the locking member 322 is a locking plate arranged in a vertical direction, where a top end of the locking plate is in driving connection with the driving member 321, and a bottom end of the locking plate presses against the first end (the left end of the horizontal support member 331 as seen in FIG. 3, and the right end of the horizontal support member 331 as seen in FIG. 4) of the horizontal support member 331 to prevent the horizontal support member 331 from rotating. When it is necessary to release the battery on the horizontal support member 331, the driving member 321 drives the locking plate to move horizontally in the direction from the second end to the first end of the horizontal support member 331 to quickly disengage the locking plate from the horizontal support member 331. After the battery is released and the horizontal support member 331 rotates back to the horizontal state, the driving member 321 further drives the locking plate to move horizontally back to press against the first end of the horizontal support member 331 again.

It should be noted that the locking member 322 is not limited to the locking plate as described above. For example, the locking member 322 may also be configured as a locking column, a locking block, etc. Such adjustments and modifications to the specific structural form of the locking member 322 do not depart from the principles and scope of the invention and should all fall within the scope of protection of the invention.

Furthermore, it should be noted that, in practical applications, the driving member 321 can be configured as a linear motor, a hydraulic cylinder, a pneumatic cylinder, or the like. Those skilled in the art can flexibly configure the specific type and structural form of the driving member 321, as long as the driving member 321 can drive the locking member 322 to move horizontally.

Preferably, as shown in FIG. 4, the locking mechanism 32 of the invention further includes a position detection member mounted on the fixed member 31, and the position detection member is used for detecting a movement position of the locking member 322.

As an example, the position detection member includes a first proximity switch 323 and a second proximity switch 324. The first proximity switch 323 and the second proximity switch 324 are spaced apart along a movement direction of the locking member 322. When the driving member 321 drives the locking member 322 to move to the locked position, the first proximity switch 323 sends a signal that the driving member 321 stops operating. When the driving member 321 drives the locking member 322 to move to the unlocked position, the second proximity switch 324 sends a signal that the driving member 321 stops operating.

It should be noted that the position detection member is not limited to the proximity switches as described above. For example, the position detection member can also be configured as a contact position sensor, an infrared sensor, a distance sensor, etc. Such adjustments and modifications to the specific type of the position detection member do not depart from the principles and scope of the invention and should all fall within the scope of protection of the invention.

Preferably, as shown in FIGs. 3 and 4, a rotary member is provided at the first end of the horizontal support member 331. The rotary member can rotate relative to the horizontal support member 331, and the locking member 322 presses against the rotary member.

By providing the rotary member on the horizontal support member 331, when the locking member 322 moves relative to the horizontal support member 331, the friction between the locking member and the horizontal support member can be reduced, so that the locking member 322 can move more easily relative to the horizontal support member 331, thereby facilitating the smooth release of the battery and also facilitating the locking member 322 pressing against the horizontal support member 331 again.

As an example, as shown in FIGs. 3 and 4, a horizontal fixed shaft 333 is provided on the horizontal support member 331, and the rotary member is a roller 334 sleeved on the horizontal fixed shaft 333. The roller 334 can rotate relative to the horizontal fixed shaft 333. In the locked state, the locking member 322 presses against a top surface of the roller 334.

It should be noted that the rotary member is not limited to the roller 334 as described above. For example, a hemispherical recess can be formed on an upper surface of the horizontal support member 331, and the rotary member is a ball placed in the hemispherical recess. The ball can rotate freely within the hemispherical recess, and so on. Such adjustments and modifications to the specific structural form of the rotary member do not depart from the principles and scope of the invention and should all fall within the scope of protection of the invention.

Preferably, as shown in FIG. 4, the locking mechanism 32 of the invention further includes a first guide member 325 and a second guide member 326. The first guide member 325 is fixedly connected to the fixed member 31, and the second guide member 326 is fixedly connected to the locking member 322. The first guide member 325 fits with the second guide member 326 to guide the locking member 322 during its movement relative to the fixed member 31.

As an example, the first guide member 325 is a horizontal slide rail mounted on the fixed member 31, and the second guide member 326 is a slider adapted to the horizontal slide rail. The slider can move along a length direction of the horizontal slide rail. One end of the slider is fixedly connected to the locking member 322.

It should be noted that the first guide member 325 and the second guide member 326 are not limited to the fitted horizontal slide rail and slider described above. For example, the first guide member 325 and the second guide member 326 may also be configured as fitted guide post and guide block, etc.

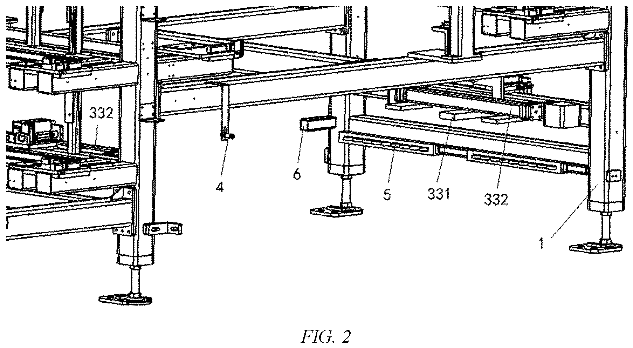

Preferably, as shown in FIGs. 1 and 2, the battery compartment of the invention further includes a first horizontal positioning member and a second horizontal positioning member that are arranged above the horizontal support member 331. The first horizontal positioning member and the second horizontal positioning member are respectively used to position the risky battery 7 in an X-direction and a Y-direction so that the risky battery 7 accurately falls onto the horizontal support member 331 and thus accurately falls into the cooling cavity when released. The X-direction is a length direction of the battery, and the Y-direction is a width direction of the battery. In FIG. 1, the X-direction is a left-right direction, and the Y-direction is a direction perpendicular to the plane of the page.

As an example, as shown in FIGs. 1 and 2, the rotating member 332 mounted on the horizontal support member 331 forms the first horizontal positioning member of the invention. The rotating member 332 is arranged on a top surface of the horizontal support member 331. Two rotating members 332 are spaced apart along the X-direction. The distance between the two rotating members 332 is slightly greater than the size of the battery along the X-direction, so that the risk battery 7 located on the horizontal support member 331 will fall exactly between the two rotating members 332.

It should be noted that, in practical applications, those skilled in the art can configure the first horizontal positioning member as two positioning blocks or positioning columns spaced apart along the X-direction. The positioning blocks or the positioning columns are mounted on the battery rack 1. Such adjustments and modifications to the specific structural form of the first horizontal positioning member do not depart from the principles and scope of the invention and should all fall within the scope of protection of the invention.

Of course, the two rotating members 332 are preferably configured as the first horizontal positioning member, thereby simplifying the structural arrangement, facilitating layout and reducing costs.

As an example, as shown in FIG.1 and 2, the second horizontal positioning member is a third proximity switch 4 mounted on the battery rack 1. The third proximity switch 4 is oriented in the Y-direction. A battery transfer mechanism (such as a stacker) mounted inside the battery compartment moves the risk battery 7 along the Y-direction to a position above the horizontal support member 331. When the risk battery 7 approaches the third proximity switch 4, the third proximity switch 4 sends a signal to cause the battery transfer mechanism stopping moving the risk battery 7 and withdraw, thereby placing the risk battery 7 onto the horizontal support member 331.

It should be noted that the second horizontal positioning member is not limited to the third proximity switch 4 as described above. For example, the horizontal support member 331 may also be configured as a distance sensor, a limiting block, and so on. Such adjustments and modifications to the specific structural form of the second horizontal positioning member do not depart from the principles and scope of the invention and should all fall within the scope of protection of the invention.

Of course, the second horizontal positioning member is preferably configured as the third proximity switch 4, which can prevent contact with the battery, thereby avoiding potential damages to the battery. In addition, the use of the third proximity switch 4 enables accurate positioning at a low cost.

Preferably, as shown in FIGs. 1 and 2, the battery compartment of the invention further includes a third horizontal positioning member and a fourth horizontal positioning member that are arranged below the supporting part. The third horizontal positioning member and the fourth horizontal positioning member are respectively used to position the cooling member 2 in the X-direction and the Y-direction to align the opening of the cooling cavity with the supporting part, such that the battery on the supporting part can accurately pass through the opening and fall into the cooling cavity when released.

The third horizontal positioning member and the fourth horizontal positioning member are used to horizontally position the cooling member 2 to enable the opening of the cooling member 2 to be aligned with the supporting part above, so that the battery on the supporting part can accurately pass through the opening and fall into the cooling cavity when released.

It should be noted that, in practical applications, those skilled in the art can configure the third horizontal positioning member and the fourth horizontal positioning member as top plate blocks, positioning plates, positioning columns, position sensors, distance sensors, etc. Such adjustments and modifications to the specific structural forms of the third horizontal positioning member and the fourth horizontal positioning member do not depart from the principles and scope of the invention and should all fall within the scope of protection of the invention.

Preferably, as shown in FIGs. 1 and 2, the third horizontal positioning member includes two sets of positioning rollers 5 arranged oppositely in the X-direction, where the positioning rollers 5 are horizontally mounted on the battery rack 1 and are rotatable about vertical axes relative to the battery rack 1.

As an example, each set of positioning rollers 5 includes multiple roller bodies distributed along the Y-direction. The roller bodies are arranged horizontally and can rotate about the vertical axes relative to the battery rack 1. When installing the cooling member 2, the cooling member 2 enters along the Y-direction. When a side surface of the cooling member 2 is in contact with the roller bodies, the roller bodies can rotate relative to the battery rack 1, facilitating the smooth entry of the cooling member 2 into an installation position.

The fourth horizontal positioning member includes two strip-shaped positioning blocks 6 extending along the X-direction and mounted on the battery rack 1. The two strip-shaped positioning blocks 6 are arranged oppositely, so that after being moved to the installation position, the cooling member 2 just abuts against the strip-shaped positioning blocks 6.

It should be noted that, in practical applications, those skilled in the art may configure the fourth horizontal positioning member as a strip-shaped positioning plate, etc.

Preferably, as shown in FIG. 1, wheels 21 are further provided at a bottom of the cooling member 2 of the invention, and pull handles 22 are provided on a side portion of the cooling member 2.

As such, after an abnormal battery falls into the cooling cavity of the cooling member 2, the cooling member 2 may be easily removed from the battery compartment for subsequent processing.

As an example, an access port is formed in a housing of the battery compartment at a position corresponding the cooling member 2. Staff can install the cooling member 2 into the housing through the access port or remove the cooling member 2 from the inside of the housing. A fire door is provided at the access port, the fire door allows the access port to be opened and closed, and a bottom of the fire door is hinged to the housing. The fire door forms a ramp when opened, so that the cooling member 2 can be moved into or out of the housing along the ramp.

Preferably, the cooling member 2 of the invention is provided with a film (not shown) covering the opening.

The film seals the opening of the cooling cavity, thereby preventing the water in the cooling cavity against evaporation. When falling off from the rotational support device 3, the battery can directly puncture the film and fall into the cooling cavity.

Preferably, the battery compartment of the invention further includes a heating member (not shown) arranged in the cooling cavity, where the heating member can heat the water in the cooling cavity to prevent freezing.

As an example, the heating member is configured as a heating rod with a temperature probe. When the temperature of the water in the cooling cavity approaches zero, the heating rod is started to heat the water in the cooling cavity to prevent freezing.

Those skilled in the art can understand that although some embodiments herein include some but not other features included in other embodiments, combinations of features of different embodiments are meant to be within the scope of the invention and form different embodiments. For example, in the claims of the invention, any one of the claimed embodiments can be used in any combination.

Heretofore, the technical solutions of the invention have been described with reference to the preferred implementations shown in the accompanying drawings. However, those skilled in the art can readily understand that the scope of protection of the invention is apparently not limited to these specific implementations. Without departing from the principles of the invention, those skilled in the art may make equivalent changes or replacements to related technical features. The technical solutions obtained after these changes or replacements fall within the scope of protection of the invention.

## Claims

1. A battery compartment of a battery charging and swapping station, comprising:
a battery rack configured to store batteries;
a cooling member located at a bottom of the battery rack, the cooling member having a cooling cavity capable of accommodating a battery, wherein the cooling cavity has an opening at a top through which allows a battery to pass; and
a supporting part located above the cooling cavity, wherein the supporting part is configured to both bear and release the battery, allowing the battery to fall quickly into the cooling cavity.

2. The battery compartment of a battery charging and swapping station according to claim **1,** wherein the supporting part comprises two rotational support devices oppositely arranged in a horizontal direction, the rotational support devices being configured to be unable to rotate in a locked state so as to bear the battery, and to be allowed to rotate in an unlocked state so as to release the battery.

3. The battery compartment of a battery charging and swapping station according to claim 2, wherein each of the rotational support devices comprises a fixed member, and a locking mechanism and a rotational support mechanism that are mounted on the fixed member, wherein the rotational support mechanism is pivotally connected to the fixed member;
the locking mechanism is configured to maintain the rotational support mechanism in a horizontal state to bear the battery in a locked state; and
the locking mechanism is further configured to allow the rotational support mechanism to rotate to release the battery in an unlocked state.

4. The battery compartment of a battery charging and swapping station according to claim 3, wherein the rotational support mechanism comprises a horizontal support member and a rotating member mounted on the horizontal support member, wherein the rotating member is located between a first end and a second end of the horizontal support member and is pivotally connected to the fixed member;
the locking mechanism, in the locked state, presses against the first end of the horizontal support member or a position close to the first end of the horizontal support member to maintain the horizontal support member in a horizontal state and thus allow the second end of the horizontal support member to be able to support the battery from below; and
the locking mechanism, in the unlocked state, is capable of moving to a position away from the first end of the horizontal support member to allow the horizontal support member to rotate about the rotating member as a rotation axis to release the battery.

5. The battery compartment of a battery charging and swapping station according to claim 4, wherein the locking mechanism, in the unlocked state, is capable of moving horizontally to a position away from the first end of the horizontal support member in a direction from the second end of the horizontal support member to the first end of the horizontal support member.

6. The battery compartment of a battery charging and swapping station according to claim 5, wherein the rotational support mechanism further comprises an elastic return member mounted between the fixed member and the rotating member, so as to enable the horizontal support member to rotate and return to the horizontal state after the battery is released.

7. The battery compartment of a battery charging and swapping station according to claim 5, wherein the locking mechanism comprises a driving member mounted on the fixed member and a locking member in driving connection with the driving member, wherein the locking member presses against the first end of the horizontal support member to maintain the horizontal support member in the horizontal state, and the driving member is able to drive the locking member to move horizontally in the direction from the second end of the horizontal support member to the first end of the horizontal support member to release the locking of the horizontal support member.

8. The battery compartment of a battery charging and swapping station according to claim 7, wherein a rotary member is provided at the first end of the horizontal support member and is capable of rotating relative to the horizontal support member, and the locking member presses against the rotary member.

9. The battery compartment of a battery charging and swapping station according to claim 7, wherein the locking mechanism further comprises a position detection member mounted on the fixed member, the position detection member being configured for detecting a movement position of the locking member.

10. The battery compartment of a battery charging and swapping station according to claim 7, wherein the locking mechanism further comprises a first guide member and a second guide member, the first guide member being fixedly connected to the fixed member, the second guide member being fixedly connected to the locking member, and the first guide member fitting with the second guide member to guide the locking member during the movement thereof relative to the fixed member.

11. The battery compartment of a battery charging and swapping station according to claim 4, wherein the battery compartment further comprises a first horizontal positioning member and a second horizontal positioning member that are positioned above the horizontal support member, wherein the first horizontal positioning member and the second horizontal positioning member are respectively used to position the battery in an X-direction and a Y-direction so that the battery accurately falls onto the horizontal support member and thus accurately falls into the cooling cavity when released.

12. The battery compartment of a battery charging and swapping station according to claim 11, wherein the rotating member is arranged on a top surface of the horizontal support member to form the first horizontal positioning member.

13. The battery compartment of a battery charging and swapping station according to claim 1, wherein the battery compartment further comprises a third horizontal positioning member and a fourth horizontal positioning member that are arranged below the supporting part, wherein the third horizontal positioning member and the fourth horizontal positioning member are respectively used to position the cooling member in an X-direction and a Y-direction to align the opening with the supporting part, such that the battery on the supporting part is capable of accurately passing through the opening and falling into the cooling cavity when released.

14. The battery compartment of a battery charging and swapping station according to claim 13, wherein the third horizontal positioning member comprises two sets of positioning rollers arranged oppositely in the X-direction, the positioning rollers being horizontally mounted on the battery rack and being rotatable about vertical axes relative to the battery rack; and/or
the fourth horizontal positioning member comprises two strip-shaped positioning blocks extending in the X-direction and arranged oppositely, the strip-shaped positioning blocks being horizontally mounted on the battery rack.

15. The battery compartment of a battery charging and swapping station according to any one of claims 1 to 14, wherein wheels are provided at a bottom of the cooling member, and/or pull handles are provided on a side portion of the cooling member.

16. The battery compartment of a battery charging and swapping station according to any one of claims 1 to 14, wherein the cooling member is provided with a film covering the opening.

17. The battery compartment of a battery charging and swapping station according to any one of claims 1 to 14, wherein the battery compartment further comprises a heating member provided in the cooling cavity, the heating member being capable of heating the water in the cooling cavity to prevent freezing.

18. A battery charging and swapping station, comprising a battery compartment according to any one of claims 1 to 17.

19. The battery charging and swapping station according to claim 18, wherein an access port is formed in a housing of the battery compartment at a position corresponding to the cooling member.

20. The battery charging and swapping station according to claim 19, wherein a fire door is provided at the access port, the fire door enables the access port to be opened and closed, and the bottom of the fire door is hinged to the housing, such that the fire door forms a ramp when opened.
